# EUROPÄISCHE PATENTSCHRIFT

(11) **EP 2 220 375 B1**
(45) Veröffentlichungstag und Bekanntmachung des Hinweises auf die Patenterteilung: **18.12.2013**
(21) Anmeldenummer: 08851426.0
(22) Anmeldetag: 17.11.2008
(51) Int. Cl.: F04D 27/02, F04D 27/00

(54) **LÜFTERANDORDNUNG**
FAN ARRANGEMENT
ENSEMBLE VENTILATEUR

(30) Priorität: 19.11.2007 DE 102007057099
(43) Veröffentlichungstag der Anmeldung: 25.08.2010
(73) Patentinhaber: Ebm-Papst St. Georgen GmbH & CO. KG, 78112 St. Georgen (DE)
(72) Erfinder: GUTMANN, Markus, 78232 March (DE); KARWATH, Arno, 78652 Deisslingen (DE); DUFNER, Thomas, 78136 Schonach (DE)
(74) Vertreter: Raible, Tobias
(86) Internationale Anmeldenummer: PCT/EP2008/009701
(87) Internationale Veröffentlichungsnummer: WO 2009/065539

(56) Entgegenhaltungen:
- WO-A1-02/23298
- US-A- 5 269 660
- US-A1- 2005 084 384
- US-B1- 6 368 064

## Beschreibung

Die Erfindung betrifft eine Lüfteranordnung mit einem von einem Elektromotor angetriebenen Lüfter.

Die WO 02/23298 A1 zeigt einen Lüfters mit einem elektrischen Motor und einem Drehzahlsensor. Das Signal eines Motorstrommesswiderstands wird in ein digitales Stromsignal umgewandelt. In einem Speicher sind charakteristische Kurven A mit Werten für die Drehzahl und Leistungsaufnahme gespeichert. Eine Steuereinheit vergleicht die aktuelle Drehzahl und den aktuellen Motorstrom mit einer gewählten charakteristischen Kurve A und überprüft, ob zu viel oder zu wenig Luft fließt. Eine Korrektur des Luftflusses erfolgt ggf. über eine Anpassung der Spannung am Motor.

Die US 5, 269, 660 A zeigt einen Lüfter mit einem elektrischen Motor, welcher dazu ausgebildet ist, die Luftflussrate in einem Netzwerk von Schächten wie z.B. in einer Mine zu verändern. Eine Kontrolleinheit ermittelt aus dem Signal eines Pitotrohrs eine Solldrehzahl für den Lüfter.

Wenn ein Lüfter von einem Elektromotor angetrieben wird, ergibt sich eine Kombination der Eigenschaften des Lüfters und der Eigenschaften des Elektromotors.

Es gibt verschiedene Bauarten von Lüftern, z.B. Radiallüfter, Querstromgebläse, Axiallüfter und Diagonallüfter. Radiallüfter unterscheidet man in Radiallüfter mit rückwärts gekrümmten Schaufeln und Radiallüfter mit vorwärtsgekrümmten Schaufeln. Ebenso gibt es bei den anderen Bauarten weitere Unter-Bauarten.

Die Eigenschaften eines Lüfters ergeben sich aus der sogenannten Lüfterkennlinie, die angibt, welche Luftmenge pro Stunde (m³/h) der Lüfter bei einem bestimmten Staudruck fördert, und aus der Motorkennlinie, welche angibt, wieviel Leistung der Motor benötigt, um eine bestimmte Luftmenge pro Stunde zu fördern.

Die benötigte Leistung ergibt sich ferner aus den Betriebsbedingungen des Lüfters: Wenn z.B. ein Lüfter Luft von außen in einen Raum bläst, bei dem alle Türen und Fenster geschlossen sind, wird der Lüfter bei maximalem Staudruck betrieben. Frei ausblasend bedeutet dagegen, dass der Lüfter frei in einem Raum steht und keine räumliche Trennung und auch keine Druckdifferenz zwischen seiner Ansaug- und Auslassseite besteht. Dies bedeutet also, dass ein frei ausblasender Lüfter einen anderen Leistungsbedarf hat als ein Lüfter, der Luft in einen geschlossenen Raum hinein fördert.

Betrachtet man den Verlauf der Aufnahmeleistung einer Lüfteranordnung über dem erzeugten Luft-Volumenstrom, so sieht man, dass diese Leistung stark vom eingestellten Arbeitspunkt bzw. vom Druckaufbau im Lüfter abhängig ist. Z.B. wird bei einem Radiallüfter die maximale Leistung gewöhnlich frei ausblasend erreicht, also bei einer Druckerhöhung von Δpf = 0, während sie bei einem Axiallüfter bei einer maximalen Druckerhöhung von Δpf= Maximum erreicht wird.

Radiallüfter werden normalerweise bei höherem Staudruck eingesetzt. Arbeiten sie ohne Staudruck, also frei ausblasend, so werden sie an ihrer Leistungsgrenze betrieben, d.h. ein Radiallüfter muss für diesen Betriebspunkt ausgelegt werden, obwohl dieser in der Praxis selten und eher durch Zufall vorkommt. Dies begrenzt die Leistung eines solchen Lüfters bei anderen Betriebsbedingungen. Analoge Überlegungen gelten bei anderen Lüfterbauarten.

Es ist eine Aufgabe der Erfindung, eine neue Lüfteranordnung bereit zu stellen.

Diese Aufgabe wird gelöst durch den Gegenstand des Patentanspruchs 1.

Lüfteranordnungen sind normalerweise so ausgelegt, dass bei maximaler elektrischer Leistungsaufnahme die maximal zulässige Wicklungstemperatur des Elektromotors nicht überschritten wird. Dies bedeutet, dass bei vielen Anwendungen eine solche Lüfteranordnung "unterfordert" wird, d.h. an den meisten Arbeitspunkten arbeitet sie unterhalb ihrer maximal zulässigen Leistung.

Durch die Erfindung erreicht man, dass eine solche Lüfteranordnung an ihrer zulässigen Leistungsgrenze betrieben werden kann, d.h. mit demselben Lüfter erhält man eine verbesserte Luftleistungskennlinie. Die Überlegung ist dabei, die Lüfteranordnung immer im Bereich ihrer maximal zulässigen Leistung, also an der Leistungsgrenze, oder nahe bei dieser, zu betreiben, und dadurch mehr Volumenstrom bei gleichem Gegendruck zu erzielen, also die Luftleistung zu erhöhen, ohne dass man dazu eine größere Lüfteranordnung benötigt. Je nach Art der Lüfteranordnung können sich hierbei unterschiedliche Lösungen ergeben.

Weitere Einzelheiten und vorteilhafte Weiterbildungen der Erfindung ergeben sich aus den im Folgenden beschriebenen und in der Zeichnung dargestellten, in keiner Weise als Einschränkung der Erfindung zu verstehenden Ausführungsbeispielen, sowie aus den Patentansprüchen. Es zeigt:
- Fig. 1: eine Ausführungsform eines Luftleistungsreglers,
- Fig. 2: die Lüfterkennlinie eines Radiallüfters mit und ohne den Leistungsregler der Fig. 1,
- Fig. 3: die Darstellung der Lüfterleistung mit und ohne Leistungsregler,
- Fig. 4: die teilweise Darstellung eines Radiallüfterrads 100, dessen Lüfterschaufeln 102 "vorwärts gekrümmt" sind,
- Fig. 5: die Darstellung eines Radiallüfterrads 104, dessen Lüfterschaufeln 106 "rückwärts gekrümmt" sind,
- Fig. 6: Messkurven, welche mit dem Motor nach Fig. 1 aufgenommen wurden; sie zeigen den Staudruck Δpf in Abhängigkeit vom Volumenstrom V/t bei einer konstanten niedrigen Leistung und bei einer konstanten höheren Leistung,
- Fig. 7: Messkurven zu Fig. 1; diese zeigen die Drehzahl abhängig vom Volumenstrom bei niedriger konstanter Leistung und bei höherer konstanter Leistung,
- Fig. 8: den Motorstrom imot abhängig vom Volumenstrom V/t bei niedriger konstanter Leistung und bei höherer konstanter Leistung, und
- Fig. 9: die vom Motor 12 aufgenommene elektrische Leistung P (Watt) bei niedriger konstanter Leistung (Kurve 122) und bei höherer konstanter Leistung (Kurve 124); man erkennt, dass die Leistung im Betrieb praktisch konstant gehalten wird, so dass die Leistung des Motors voll ausgenutzt werden kann.

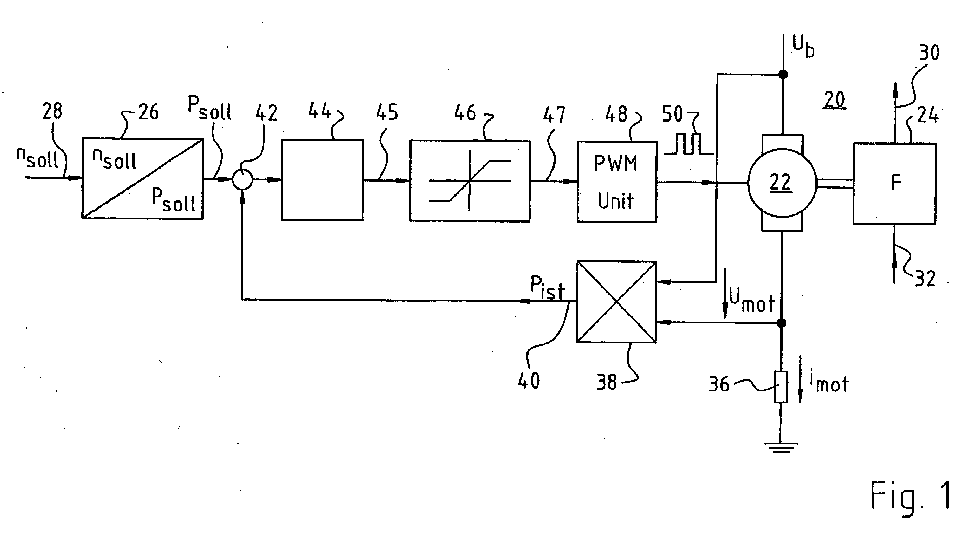

**Fig. 1** zeigt eine bevorzugte Ausführungsform einer Lüfteranordnung 20 mit einem Elektromotor 22 und einem von diesem angetriebenen Lüfter 24, welche Lüfteranordnung 20 mit Leistungsregelung arbeitet. Die Lüfteranordnung 20 wird ständig mit Leistungsregelung betrieben, um beim Lüfter 24 zumindest in Teilbereichen seiner Lüfterkennlinie eine Erhöhung der Luftleistung zu erzielen und so die Lüfteranordnung 20 besser auszunützen.

Die Lüfteranordnung 20 kann z.B. ein üblicher Gerätelüfter sein, dessen Motor 22 meist ein kollektorloser Gleichstrommotor sein wird, da bei diesem die Drehzahl leichter verändert werden kann als bei einem Wechselstrom- oder Drehstrommotor. Jedoch ist auch die Verwendung eines Wechselstrom- oder Drehstrommotors nicht ausgeschlossen.

Die Anwender solcher Lüfter sind an Lüfteranordnungen gewöhnt, die mit einer Drehzahlregelung arbeiten, und bei denen die Drehzahl eingestellt werden kann. Aus diesem Grund wird die vom Anwender vorgegebene gewünschte Drehzahl nₛₒₗₗ dem Eingang 28 eines Sollwertwandlers 26 zugeführt und dort in einen Leistungs-Sollwert Pₛₒₗₗ umgewandelt. Bei dieser Umsetzung geht man z.B. von der Drehzahl n aus, welche die Lüfteranordnung 20 annimmt, wenn dem Motor 22 eine vorgegebene elektrische Leistung P zugeführt wird und der Lüfter 24 an seinem Auslass 30 frei ausbläst, z.B. in einen Raum mit offenen Fenstern und Türen. Der Einlass des Lüfters 24 ist mit 32 bezeichnet und in diesem Fall ungedrosselt.

Wenn also z.B. dem Sollwertwandler 26 eine Drehzahl nₛₒₗₗ von 1000 U/min vorgegeben wird, verändert man die Sollleistung Pₛₒₗₗ so lange, bis die Lüfteranordnung 20, frei ausblasend, mit 1000 U/min läuft, z.B. bei 2,3 Watt. Dann wird in den Wandler 26 das Wertepaar 1000 U/min = 2,3 W eingegeben. Dies wird für den gesamten Wertebereich wiederholt, den die Lüfteranordnung 20 im Betrieb durchlaufen kann, z.B. für 500, 600, 700, 1000, 2000 ... U/min, wobei gewöhnlich zwischen diesen Werten interpoliert wird.

Alternativ kann auch eine mathematische Näherungsformel bestimmt werden, mit der die Werte für nₛₒₗₗ direkt in Werte für Pₛₒₗₗ umgerechnet werden können.

Da die Werte gemessen werden, wenn der Lüfter 24 an seinem Ausgang 30 frei ausbläst, sind naturgemäß die Drehzahlwerte im tatsächlichen Betrieb etwas von nₛₒₗₗ verschieden, aber man erhält auf jeden Fall ein ähnliches Verhalten der Lüfteranordnung 20 wie bei einem drehzahlgeregelten Lüfter.

Die vom Motor 22 aufgenommene elektrische Leistung Pist wird z.B. ermittelt, indem die Spannung uₘₒₜ am Motor 22 und der Motorstrom imot (z.B. an einem Messwiderstand 36) gemessen werden. Diese Werte werden einem Multiplikator 38 zugeführt, an dessen Ausgang 40 man einen Wert für die vom Motor 22 aufgenommene elektrische Leistung Pᵢₛₜ erhält. Diese wird, ebenso wie der Wert Pₛₒₗₗ vom Sollwertwandler 26, einem Vergleicher 42 zugeführt, dessen Ausgangssignal einem Regler 44 zugeführt wird. Je nach den Anforderungen an Schnelligkeit und Genauigkeit kann dies z.B. ein P-Regler, ein PI-Regler, oder ein PID-Regler sein. Der Regler 44 hat einen Ausgang 45, an dem man einen Stellwert erhält, der einem Begrenzer 46 zugeführt wird. Dieser begrenzt den Stellwert auf einen vorgegebenen Wert, der abhängig von der Drehrichtung verschieden sein kann.

Das begrenzte Signal am Ausgang 47 des Begrenzers 46 wird einem PWM-Modul 48 zugeführt und dort in ein PWM-Signal 50 umgeformt, das dem Motor 22 zugeführt wird und den Strom imot in diesem steuert.

Um eine Überlastung des Motors 22 zu vermeiden, wird also seine Leistung auf einen maximalen Wert begrenzt, z.B. durch Begrenzung des Stromes imot.

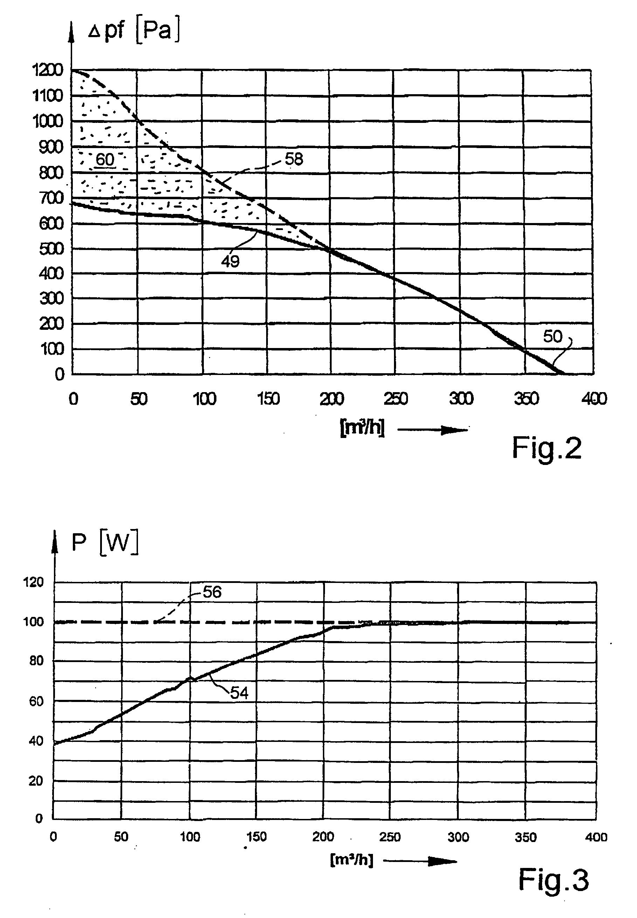

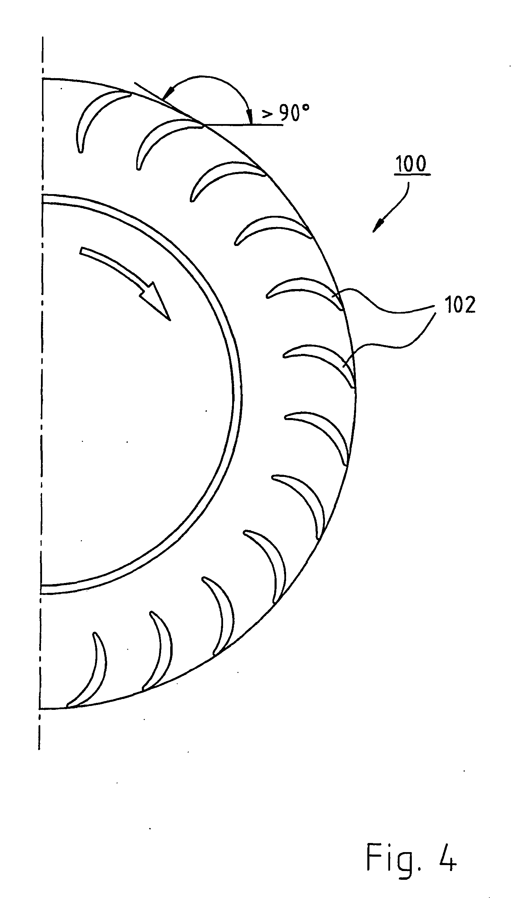

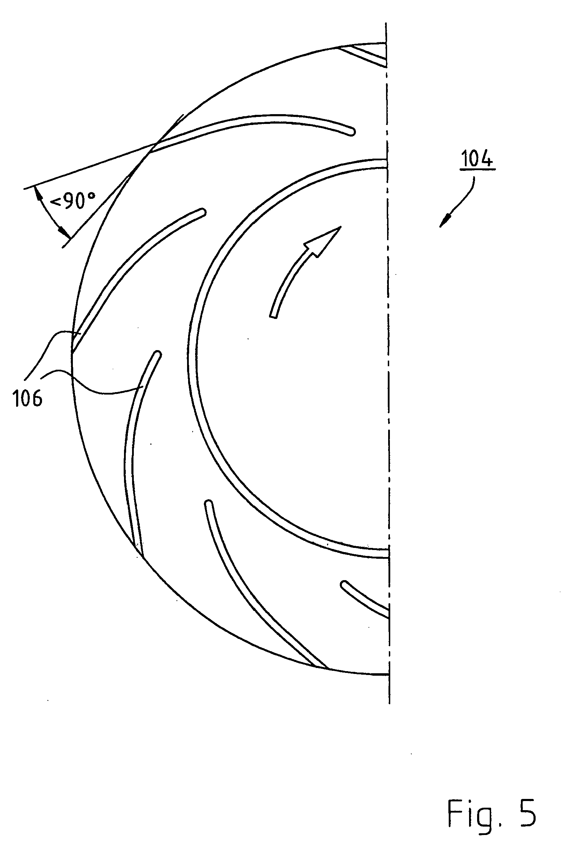

Die Fig. 2 und 3 zeigen beispielhaft den Effekt der Erfindung bei einem Radiallüfter, dessen Lüfterschaufeln vorwärts gekrümmt sind, also in Drehrichtung gekrümmt. Solche Lüfterschaufeln sind beispielhaft in Fig. 4 dargestellt. Ebenso zeigt Fig. 5 ein Lüfterrad, dessen Lüfterschaufeln rückwärts gekrümmt sind und bei dem die Erfindung in gleicher Weise verwendet werden kann, wobei sich aber Kurven ergeben, die etwas anders aussehen.

**Fig. 2** zeigt als Beispiel die Lüfterkennlinie 49 ohne die Erfindung, also den Staudruck Δpf abhängig vom Volumenstrom. Bei einem Radiallüfter wird die maximale Leistung gewöhnlich an der Stelle 50 erreicht, an welcher der Staudruck Δpf den Wert 0 hat, d.h. an einer Stelle, wo der Lüfter 24 frei ausbläst, z.B. in ein Zimmer mit geöffneten Fenstern und Türen.

Von der Stelle 50 ausgehend nach links, also wenn die Fenster und Türen nacheinander geschlossen werden, wird der Elektromotor 22 entlastet, weil der Staudruck Δpf zunimmt. Z.B. wird bei der Kurve 49 in Fig. 2 bei einem Staudruck von 700 Pa keine Luft mehr gefördert, d.h. es wird nicht mehr gekühlt, und die für den Motor 22 erforderliche elektrische Leistung nimmt gemäß Fig. 3 im Bereich von 200 bis 0 m³/h ab, wie das die Kurve 54 der Fig. 3 zeigt. In diesem Bereich liegen folglich ungenutzte Leistungsreserven der Lüfteranordnung 20.

Der Motor 22 wird z.B. in einem bestimmten Betriebszustand mit einem Leistungs-Sollwert Pₛₒₗₗ von 100 W betrieben, vgl. die Kurve 56 der Fig. 3. Wenn hier durch den zunehmenden Staudruck die Leistung Pist sinkt, wird, z.B. durch Erhöhung des Tastverhältnisses des PWM-Signals 50, die Drehzahl des Lüfters 24 so lange erhöht, bis die gewünschte Leistung Pₛₒₗₗ erreicht ist. Dadurch ergibt sich gemäß Fig. 2 eine verbesserte Lüfterkennlinie 58, bei der Luft noch bis zu einem Staudruck von etwa 1200 Pa gefördert wird. Die Leistungsreserven des Lüfters 24 werden auf diese Weise nutzbar gemacht, und die Kühlung eines vom Lüfter 24 gekühlten Geräts wird verbessert. In Fig. 2 sind diese mobilisierten Leistungsreserven mit 60 bezeichnet und durch Graufärbung hervorgehoben.

Die vorstehende Beschreibung bezieht sich auf einen Radiallüfter. Die Anwendung ist jedoch genauso möglich bei Querstromgebläsen, Axiallüftern, Diagonallüftern etc. Die Beeinflussung der Luftleistungskennlinie ist je nach Lüftertyp mehr oder weniger stark ausgeprägt.

Der Motor 22 ist standardmässig etwa so ausgelegt, dass er die maximal erforderliche Leistung Pᵢₛₜ erreicht, wenn die Betriebsspannung Ub der Nennspannung entspricht, und dass dann, wenn die Spannung Ub zu hoch wird, die Leistung begrenzt wird, welche dem Motor 22 zugeführt wird. Dies geschieht durch eine entsprechende Reduzierung des Motorstroms imot (durch Veränderung des Tastverhältnisses des Signals 50.). Auf diese Weise passt sich die Anordnung nach Fig. 1 automatisch an unterschiedliche Werte der Spannung Ub an, wie sie im Betrieb vorkommen können, und die Gefahr einer Überlastung des Motors 22 wird ausgeschlossen.

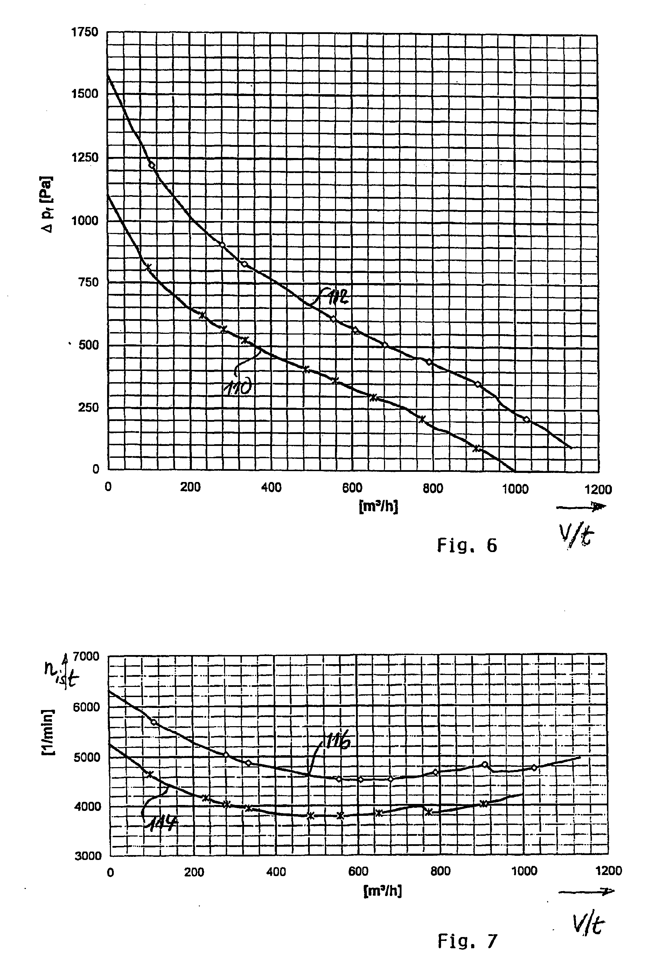

Die **Fig. 6 bis 9** zeigen Messwerte für die Leistungsregelung gemäß Fig. 1 bei einem Radiallüfter RER190 der Firma ebm-papst und bei zwei unterschiedlichen eingestellten Leistungen, nämlich einer niedrigen Leistung von etwa 135 W, und einer höheren Leistung von etwa 235 W.

**Fig. 6** zeigt den Staudruck Δpf als Funktion des Volumenstroms. Die Kurve 110 zeigt den Verlauf bei einer konstanten Leistung, die auf 135 W geregelt war, und die Kurve 112 zeigt den Verlauf bei einer konstanten Leistung von etwa 235 W. Die Kurven verlaufen etwa parallel zueinander. Der Volumenstrom wurde in der üblichen Weise mittels einer Messdüse verändert.

**Fig. 7** zeigt die Drehzahl nᵢₛₜ als Funktion des Volumenstroms. Die Kurve für 135 W ist mit 114 bezeichnet, die Kurve für 235 W mit 116. Der Volumenstrom wurde in üblicher Weise mittels einer Messdüse verändert.

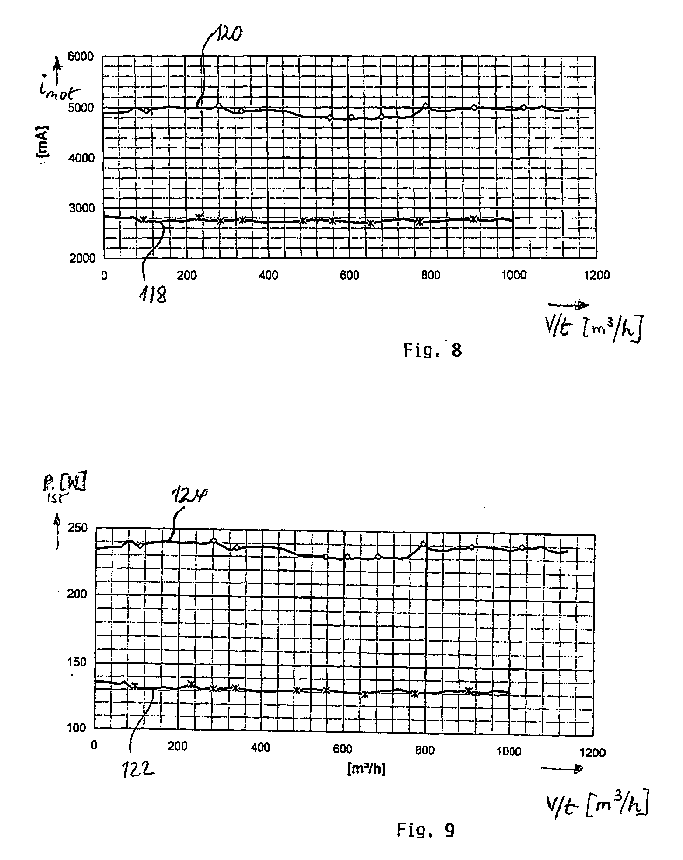

**Fig. 8** zeigt den Motorstrom imot als Funktion des Volumenstroms. Da in Fig. 1 die Gleichspannung Ub (hier 48 V) konstant gehalten wurde, wird durch den Leistungsregler 98 der Strom imot konstant gehalten. Die Kurve für 135 W ist mit 118 bezeichnet, wobei sich ein Strom von etwa 2,8 A ergab, und die Kurve für 235 W ist mit 120 bezeichnet, wobei der Strom etwa 5 A betrug. Der Volumenstrom wurde auch hier mit einer (nicht dargestellten) Messdüse verändert.

**Fig. 9** zeigt die vom Motor 22 aufgenommene elektrische Leistung Pist als Funktion des Volumenstroms. Die Kurve 122 zeigt den Verlauf für eine konstante Leistung von 135 W, und die Kurve 124 zeigt den Verlauf für eine konstante Leistung von 235 W. Der Volumenstrom wurde mittels einer nicht dargestellten Messdüse verändert.

Naturgemäß sind im Rahmen der vorliegenden Erfindung vielfache Abwandlungen und Modifikationen möglich.

## Patentansprüche

1. Lüfteranordnung mit einem von einem Elektromotor (22) angetriebenen Lüfter (24), welche Lüfteranordnung (20) aufweist:
Eine Vorrichtung zur Erfassung der vom Elektromotor (22) im Betrieb aufgenommen elektrischen Leistung (Pᵢₛₜ);
eine Eingabevorrichtung (28) zur Eingabe einer gewünschten Drehzahl (nₛₒₗₗ) dieses Elektromotors;
einen Wandler (26) zur Umsetzung dieser gewünschten Drehzahl (nₛₒₗₗ) in eine gewünschte elektrische Leistung (Pₛₒₗₗ);
einen Regler (44), welcher den den Elektromotor (22) steuernden Stellwert (45) so regelt, dass der Unterschied zwischen der im Betrieb aufgenommenen elektrischen Leistung (Pᵢₛₜ) und der gewünschten elektrischen Leistung (Pₛₒₗₗ) reduziert wird, um so die Luftleistungskennlinie (Fig. 2) der Lüfteranordnung (20) zumindest in einem Teil des gesamten Betriebsbereichs zu verbessern, indem die Lüfteranordnung an oder nahe bei ihrer augenblicklich eingestellten Leistung (Pₛₒₗₗ) betrieben wird.

2. Lüfteranordnung nach Anspruch 1, bei welcher die vom Elektromotor (22) aufgenommene elektrische Leistung (Pᵢₛₜ) mindestens eine Komponente aufweist, welche durch Multiplikation einer vom gemessenen Motorstrom (iₘₒₜ) abhängigen Größe mit einer von der gemessenen Motorspannung (umot) abhängigen Größe berechnet ist.

3. Lüfteranordnung nach Anspruch 1 oder 2, bei welcher zur Erzeugung des Steuersignals (50) für den Strom (iₘₒₜ), der dem Elektromotor (22) im Betrieb zugeführt wird, ein PWM-Generator (48) vorgesehen ist.

4. Lüfteranordnung nach Anspruch 3, bei welcher der PWM-Generator (48) vom Ausgang des Reglers (44) gesteuert ist.

## Claims

1. Fan arrangement having a fan (24) driven by an electric motor (22), which fan arrangement (20) comprises:
A device for detecting the electric power (P_{actual}) consumed by the electric motor (22) during operation;
an input device (28) for inputting a desired rotational speed (n_{desired}) of this electric motor;
a converter (26) for converting this desired rotational speed (n_{desired}) into a desired electric power (P_{desired});
a controller (44), which regulates the control output (45) controlling the electric motor (22) in such a way that the difference between the electric power (P_{actual}) consumed during operation and the desired electric power (P_{desired}) is reduced, in order thereby to improve the air output characteristic curve (Fig. 2) of the fan arrangement (20) at least in a portion of the overall operating range, by operating the fan arrangement at or close to its currently set power (P_{desired}).

2. Fan arrangement according to Claim 1, in which the electric power (P_{actual}) consumed by the electric motor (22) has at least one component which is calculated by multiplying a variable dependent on the measured motor current (iₘₒₜ) by a variable dependent on the measured motor voltage (uₘₒₜ).

3. Fan arrangement according to Claim 1 or 2, in which a PWM generator (48) is provided in order to generate the control signal (50) for the current (iₘₒₜ) which is delivered to the electric motor (22) during operation.

4. Fan arrangement according to Claim 3, in which the PWM generator (48) is controlled by the output of the controller (44).

## Revendications

1. Ensemble ventilateur avec un ventilateur (24) entraîné par un moteur électrique (22), lequel ensemble ventilateur (20) présente :
un dispositif pour détecter la puissance électrique (Pᵢₛₜ) absorbée par le moteur électrique (22) en fonctionnement ;
un dispositif d'entrée (28) pour saisir une vitesse de rotation souhaitée (nₛₒₗₗ) de ce moteur électrique ;
un convertisseur (26) pour convertir cette vitesse de rotation souhaitée (nₛₒₗₗ) en une puissance électrique souhaitée (Pₛₒₗₗ) ;
un régulateur (44), qui régule la valeur réglante (45) commandant le moteur électrique (22) de telle sorte que la différence entre la puissance électrique (Pᵢₛₜ) absorbée en fonctionnement et la puissance électrique souhaitée (Pₛₒₗₗ) est réduite, pour améliorer ainsi la courbe caractéristique de puissance de ventilation (fig. 2) de l'ensemble ventilateur (20) au moins dans une partie de la plage totale de fonctionnement, par le fait que l'ensemble ventilateur est exploité à ou près de sa puissance momentanément réglée (Pₛₒₗₗ).

2. Ensemble ventilateur selon la revendication 1, dans lequel la puissance électrique (Pᵢₛₜ) absorbée par le moteur électrique (22) présente au moins une composante qui est calculée en multipliant une grande dépendante de l'intensité mesurée du moteur (iₘₒₜ) par une grandeur dépendante de la tension électrique mesurée du moteur (uₘₒₜ).

3. Ensemble ventilateur selon la revendication 1 ou 2, dans lequel il est prévu un générateur MIL (48) pour produire le signal de commande (50) pour l'intensité (iₘₒₜ) qui est apporté au moteur électrique (22) en fonctionnement.

4. Ensemble ventilateur selon la revendication 3, dans lequel le générateur MIL (48) est commande par la sortie du régulateur (44).
